# EUROPEAN PATENT APPLICATION

(11) **EP 2 078 972 A2**
(43) Date of publication of application: **15.07.2009**
(21) Application number: 08380347.8
(22) Date of filing: 31.12.2008
(51) Int. Cl.: G02B 6/44

(54) **Cabling system for miltiple applications, multifunction cable and related base socket**

(30) Priority: 08.01.2008 ES 200800022
(71) Applicant: Lan-Fop Systems S.L., 08290 Cerdanyola Del Valles, Barcelona (ES)
(72) Inventor: Lodo Botella, Sergio, 08290 Cerdanyola del Valles Barcelona (ES)
(74) Representative: Durán Moya, Luis-Alfonso

(57) **Abstract**

The system comprises the arrangement of one or more cables, each of which is a single cable consisting of an outer covering sheath which contains, in close contact, electrical cables for power distribution and optic fibre cables for data signal distribution, the installation thereof being carried out as single cabling up to single socket bases embedded in the walls, which contain in the same unit electrical socket elements and connector elements for data and signalling equipment connection cables, in combination with computer switches for optical converters for the data transmitted along the optic fibre cables for distribution in parallel with the electrical cabling.

## Description

The present invention relates to a cabling system for multiple applications and to a novel multifunction cable for producing said system, which has significant features of novelty and inventive step.

As is known, the laying of cables in buildings to service electrical installations and also signal-receiving installations, for example telephonic installations, TV, etc. currently involves a large amount of labour and a multiplicity of operations. In addition, many problems arise because of interference between the electromagnetic fields created by the currents in the conductor cables, which produce harmful effects. In particular, individual cabling for each of the services involves a considerable amount of labour.

To overcome the problems that exist at present the inventors have carried out tests and experiments which have led to the invention of the present cabling system and corresponding multifunction cable.

Basically, the cabling system according to the present invention is characterised in that it comprises, inside a cable with a single sheath, which may be installed as a unit, the electrical installation conductors and other conductors which can be used for the transmission of signals, in particular optic fibre cables. The single cable constructed in this manner may be fitted easily for single cabling in buildings, resulting in great ease of installation because of less time required for laying electrical cables and signal transmission cables, and no labour cost for the ducting and installation of data cables, since it is the same as is required for laying the electrical cables which are usually already allowed for in buildings, whether for offices, dwellings or industrial use.

The novel cabling system therefore comprises a single conduit for signal and electrical cabling for incorporation, from the entry thereof into the building that is to be cabled, of single cables carrying the electrical cables and the signal transmission cables for distribution thereof to the various areas or floors of the building, and arriving either at sockets incorporated in the wall which simultaneously comprise connection means for electrical and signalling devices, or centralised transfer switches ("hub switches"), for distributing signal cables to different points, such as computers, TV, etc.

The multifunction cable according to the present invention, for producing the system according to the present invention, basically comprises a single braided outer sheath which contains inside it the optic fibre cables and electrical conducting cables, in such a way that the whole set of cables required for a building of any type can be combined in a single cable which can be laid in the conduits, channels, etc. provided for the lighting cables, so the individual assembly cost thereof is therefore zero. At the same time, the braiding of the cable sheath, which is preferably produced from a very strong man-made material, for example PVC, provides characteristics of very low friction, and high resistance to abrasion and tensile strength, thus considerably simplifying the cabling compared with the generally used means. Similarly, the cable according to the invention has limited elongation, of approximately 1.5% at 30 daN, high resistance to moisture, bacteria and ultraviolet rays, as well as significant flexibility, and also allows the coding and labelling of each cable or group of cables. It should also be mentioned that the sheath is ecologically sound with no chlorine content.

The cabling system according to the present invention is free from electromagnetic interference in data transmission, optimising the laying of electrical cable and optic fibre cable in the same cable (FOP-BUS), and having 10/100 Mbps Fast Ethernet connection points incorporated in the same electrical outlet. By means of the novel system various computers, laptops, ADSL routers, imaging systems (Imagenio, digital channel, multimedia disks, IP video cameras), security systems, IP telephony, IP interphony, domotics and IP home electrical appliances, for example TFT terminal or remote technical assistance, etc. can be interconnected in a network. Suitable distributors are used to distribute the FOP-BUS.

The invention also relates to the connection base used in the cabling system according to the invention to receive the multifunction cable thereof. Said socket base is characterised in that it is a single base which may be embedded and contains in the same unit the electrical socket element and the connector element for data and signalling equipment connection cables, combining computer switches for optical converters for the data transmitted through the optic fibre cables for distribution in parallel with the electrical cables.

For a better understanding thereof, the accompanying drawings of embodiments are given as an explanatory but not limiting example of the present invention.
Fig. 1 is a diagrammatic section of a house with the cabling installation according to the present invention.
Fig. 2 is a diagrammatic view showing the construction of a cable according to the invention used in the cabling system thereof.
Fig. 3 is a perspective view in section of a cable according to the invention.
Fig. 4 is a diagrammatic cross-section of the cable.
Fig. 5 is an external elevation of the outer sheath covering the multifunction cable.

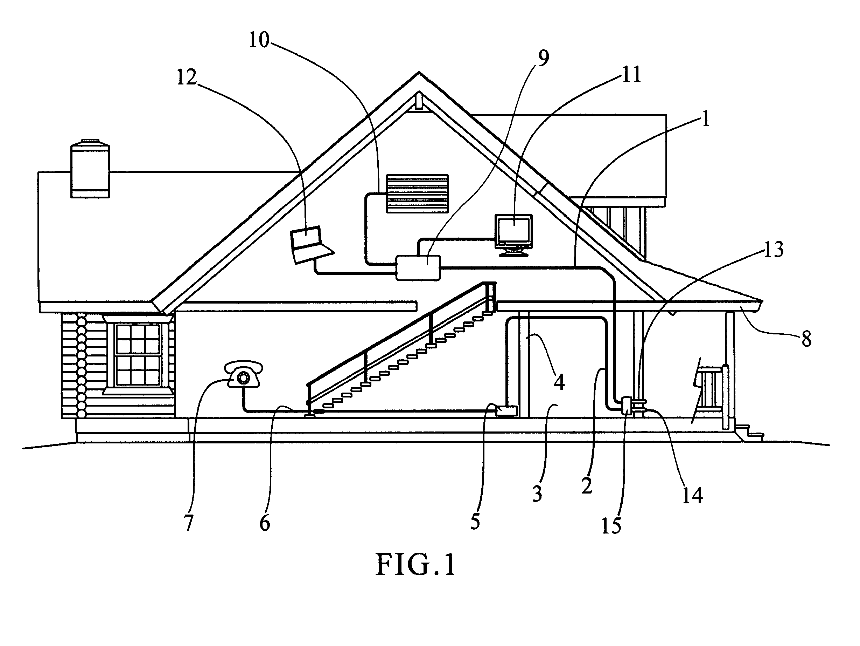

Referring to Fig. 1, the system according to the invention comprises the arrangement of single cables, such as 1 and 2, each one of which contains a single covering sheath and in the interior thereof electrical cables and optic fibre cables to allow unified supply services to single socket points. Thus for example, the conduit 2, after running parallel to the walls of an area 3 and passing through a wall 4 may arrive at a single embedded box 5 from which electrical or data cables are distributed, such as for example the cable 6 for a telephone 7. After passing along channels, along walls, and through the ceiling 8, the cable 1, with similar characteristics to the cable 2, arrives at a single distribution box 9, in which the terminals of the electrical cables and also the data cables can be incorporated in a similar way to box 5, an electrical consumption point being supplied directly by means of the cable 10 or data reception / transmission points, such as a television set 11 and a computer 12. An optical distribution switch and/or a router with an optical converter, which is used for connection in parallel with the electrical cables, can be incorporated in the same box 9.

Referring to the diagram in Fig. 1, the supply of the electric power from the outside and the data inlets have been illustrated diagrammatically by the separate inlets 13 and 14 which are combined in a single embedded box 15.

The cable provided in the present invention therefore comprises a single braided outer sheath 16 and electrical service cables, such as 17, 18 and 19, together with optic fibre cables 20 which may be composed of two or more elements. A tensile element 21 is incorporated in the same cable to avoid tensile stresses on the electrical and optic fibre elements.

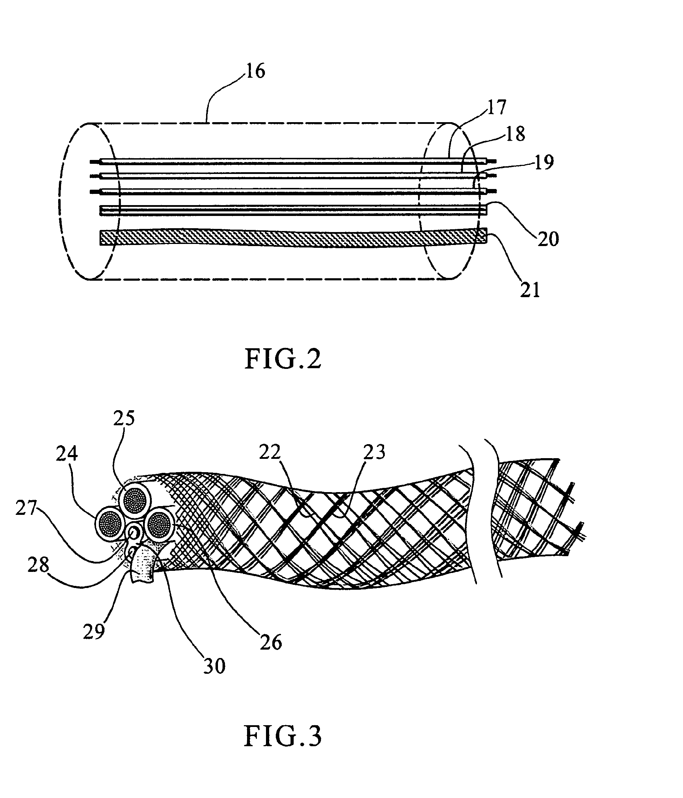

Fig. 3 is a more detailed view, in which the sheath is shown diagrammatically by means of multiple threads, such as 22 and 23, braided together to form the cylindrical cover 16 for the inner electrical cables indicated by the reference numerals 24, 25 and 26, optic fibre cables, such as 27 and 28, incorporated in the same extruded element, and an auxiliary strip 29 bearing the labelling of the cable, which is visible from outside, these elements corresponding to those illustrated diagrammatically in Fig. 2.

Obviously, the covering sheath achieved by braiding threads 22 and 23 will have variable characteristics, although the fundamental characteristic thereof lies in its production from threads of man-made material, for example vinyl fibres, which allow many functional advantages to be achieved which will be enumerated below.

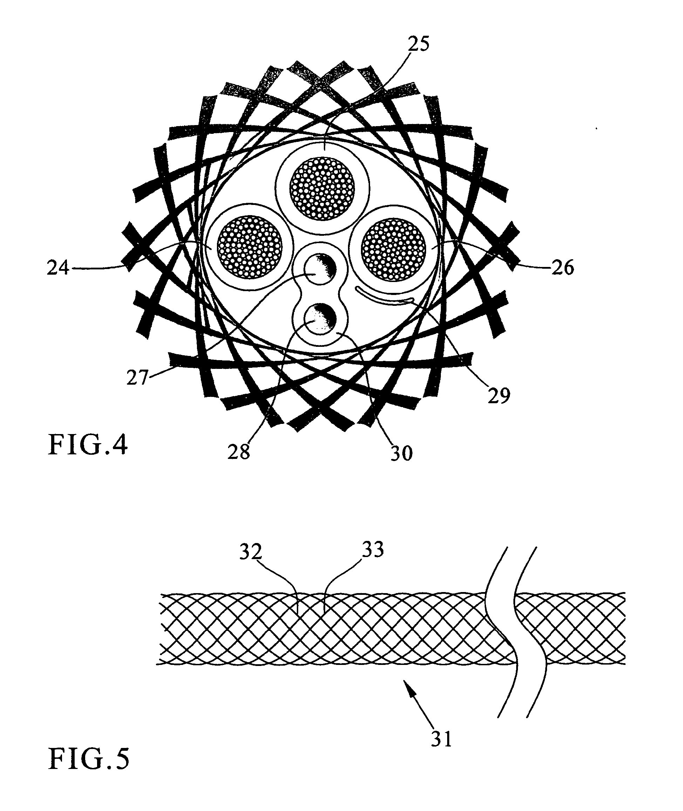

Another diagrammatic cross-section of the cable in Fig. 4 shows the cable of Fig. 3, in which it can clearly be seen that the electrical cables 24, 25 and 26 consist of multiple conducting cables of copper or other suitable material, and that the optic fibre elements consist of the cables 27 and 28 included in the same braided outer cover 30. The auxiliary strip 29 is also incorporated inside the covering sheath which surrounds the set of cables, in close contact with the outer covers thereof, and carries the labelling which is visible from the outside.

Referring to Fig. 5, the braided sheath 31 is composed of many threads, such as 32 and 33, which in turn may be produced in the form of multi-filaments which are braided to obtain better strength characteristics.

The present invention provides a optic fibre optical system for computer networks in homes, offices and industry which has optic fibre cabling in the form of a bus and allows the incorporation of electronic conversion assemblies contained in the electrical bases themselves which can be incorporated in the wall, in combination with optical switches for distribution of the network points.

The system is free from electromagnetic interference in data transmission and optimises the fixing of electrical cable and optic fibre cable in the same cable, enabling it to be arranged close to the electrical outlet for 10/100 Mbps Fast Ethernet connection points, so that various computers, image systems, security and telephony systems, home electrical appliances or others can be incorporated.

In addition, the cable according to the present invention has many advantages because of its high resistance to abrasion, high tensile strength greater than 121 daN, very low friction facilitating the passage of the conductor set, low elongation (1.5% at 30 daN), and high resistance to moisture, bacteria and ultraviolet rays, and high flexibility. In addition, the multifunction cable according to the present invention has equal sliding characteristics in both directions and effectively parallelizes the cables fitted inside the protection sheath.

Although the invention has been described on the basis of the specific embodiments that have been shown, it will be appreciated that those skilled in the art may introduce substantial variations thereto, such as in the number of cables used, the thickness and applications thereof, the specific materials for the outer sheath, etc. without departing from the scope of the present invention as defined in the claims below.

## Claims

1. Cabling system for multiple functions, **characterised in that** one or more cables are provided, each of which is a single cable consisting of an outer covering sheath which contains, in close contact, electrical cables for the distribution of power and optic fibre cables for the distribution of data signals, the installation thereof being carried out as single cabling up to single socket bases embedded in walls, which contain in the same unit electrical socket elements and connector elements for data and signalling equipment connection cables, in combination with computer switches for optical converters for the data transmitted along the optic fibre cables for distribution in parallel with the electrical cabling.

2. Multifunction cable consisting of a single outer sheath of high-strength synthetic resin threads which have a low coefficient of friction and are braided together, the sheath containing power transmission cables and optic fibre cables, as well as auxiliary laminar elements, which are held close together.

3. Cable according to claim 2, **characterised in that** the braiding consists of polyvinyl chloride multi-filaments.

4. Cable according to claim 2, **characterised in that** an auxiliary laminar element carrying the labelling of the cable which is visible from the outside is arranged longitudinally inside the sheath.

5. Socket base of the embedded type, **characterised in that** it jointly comprises electrical socket elements and connector elements for data and signalling equipment connection cables in combination with computer switches for optical converters for the data transmitted along the optic fibre cables for distribution in parallel with the electrical cables.
